Europäisches Patentamt

European Patent Office

Office européen des brevets

(19)

(11) Publication number: 0 365 922

A2

(12) **EUROPEAN PATENT APPLICATION**

(21) Application number: 89118891.4

(22) Date of filing: 11.10.89

(51) Int. Cl.⁵: B24B 55/04

(30) Priority: 25.10.88 IT 3352288 U

(43) Date of publication of application:
02.05.90 Bulletin 90/18

(84) Designated Contracting States:
AT BE CH DE ES FR GB GR LI LU NL SE

(71) Applicant: MAUDI S.r.l.
Via Pavone 18
I-29100 Piacenza PC(IT)

(72) Inventor: Bolzoni, Emilio
Via De Gasperi 17
I-29010 Pontenure (PC)(IT)

(74) Representative: La Ciura, Salvatore
Via Francesco Sforza 3
I-20122 Milan(IT)

(54) **Guard for rotary disk tools.**

(57) Guard for rotary disc tools comprising a protective casing which wholly surrounds the tool except for one free side, a support which slides in relation to the said guard, and equipment designed to enable the tool to be fitted on the said support.

**FIG. 2**

# GUARD FOR ROTARY DISC TOOLS

This innovation relates to a guard designed for rotary disc tools, in particular for portable electric tools such as lapping machines, orbital honing machines, mills, grindwheels and the like.

The novelty of the innovation lies in the special design and arrangement of the parts, as a result of which the protective element slides in relation to the tool, enabling the latter to penetrate the workpiece to a greater or lesser depth, while the free part remains entirely enclosed by the protective guard.

The guard in accordance with the innovation therefore constitutes a basic operator safety feature, and in addition is highly practical to use.

Numerous types of portable cutting equipment use as the tool a disc with the actual tools fitted to the perimeter, which rotates at high speed.

The use of this apparatus involves considerable risk to the operator if the apparatus should get out of control while the tool is still moving, or if the tool breaks during operations, expelling splinters at high speed.

In addition, splinters and parts of the material removed by the tool always constitute a source of danger.

For this reason, these types of apparatus are commonly fitted with a protective screen.

In currently known machines, however, these protective elements are of limited efficacy because in order for the apparatus to be used freely they must be of small size, which reduces their efficacy.

For example, in the case of orbital honing machines, the protective screen consists of a semicircular part which covers just over half the tool on one side only.

Mills used to cut walls are surrounded by a fixed guard, obliging the operator to stop work and adjust its position whenever the cutting depth needs to be altered; equally, this guard only performs its protective function after the tool has wholly penetrated the workpiece, so that any splinters can be expelled freely at the beginning of cutting.

In order to eliminate these problems, this innovation offers a guard for rotary disc tools which basically consists of a casing that completely surrounds the tool but is fitted to slide in relation to it.

The guard can therefore be rested on the part to be cut while the tool is slid for cutting, and the operator remains wholly protected.

This innovation will now be described in detail, with special reference to the annexed figures in which:

Figures 1 and 2 illustrate the guard in accordance with the innovation, with the tool in the fully retracted position and the working position respectively.

Figure 3 illustrates the various components of the guard in accordance with the innovation.

Figure 4 shows a cross-section of a protective device in accordance with the innovation, applied to a mill.

The guard in accordance with the innovation comprises a pair of parallel walls 1 and 2, interconnected by a side wall 3 in order to constitute a sort of casing open at the bottom which is inserted around tool 4. The latter in turn is fitted to shaft 5 of apparatus 6, which in this specific example is a mill.

Wall 1 is removable, and secured with bolts or the like, so that the tool can be replaced.

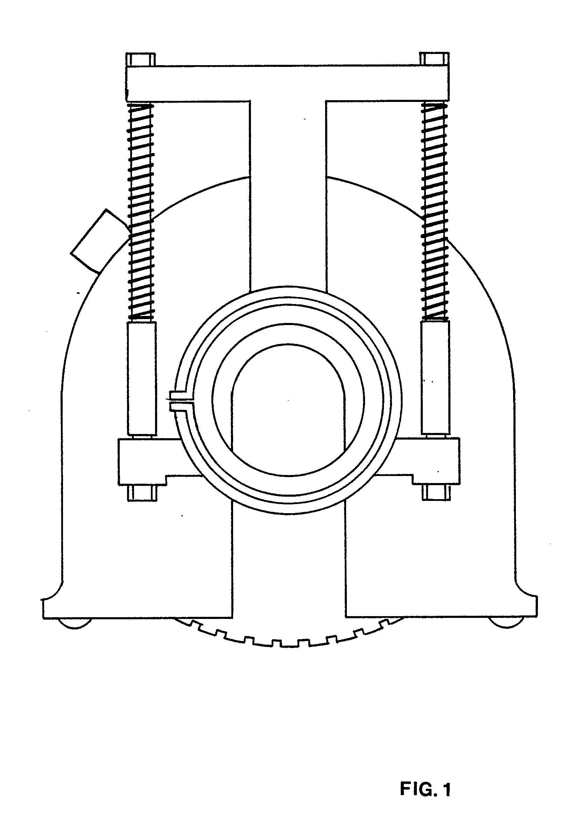

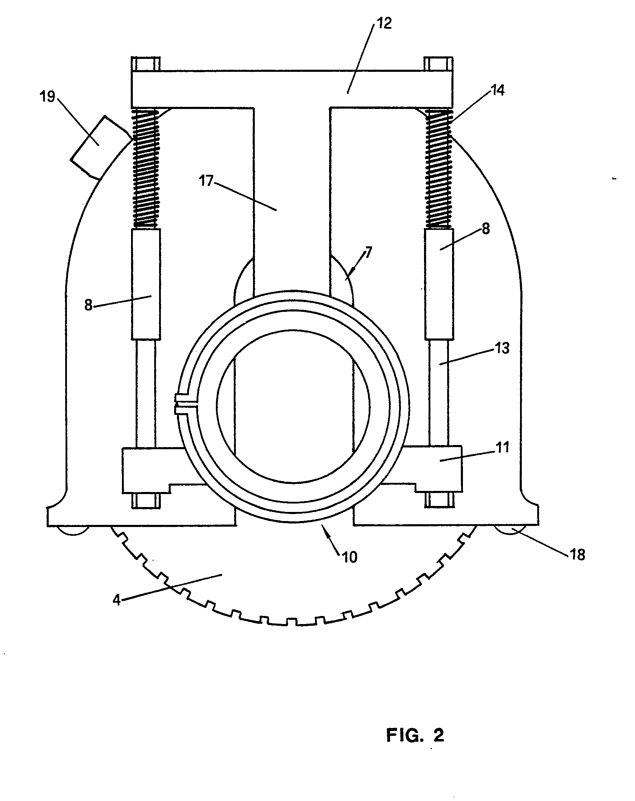

Figures 1 and 2 illustrate the assembly viewed from wall 2.

The latter contains an opening 7 designed to allow the tool shaft to slide in relation to the guard.

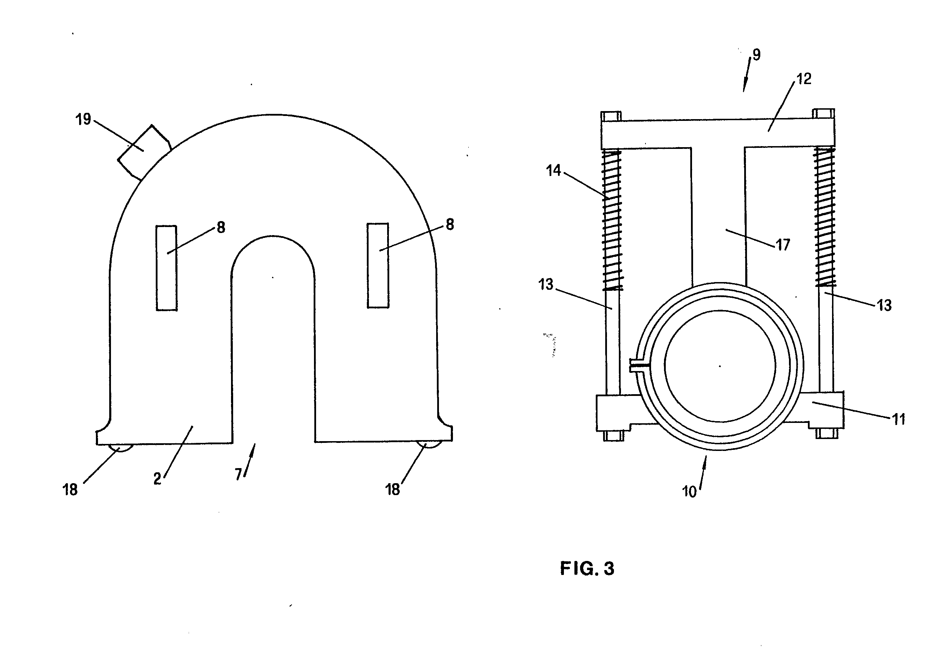

A pair of guides 8 is welded to wall 2, allowing the guard to be fitted so that it slides on a support. Support assembly 9 is shown in figure 3.

Support 9 comprises parts 10 which secure it to the mill.

Parts 10 are integral with lower arm 11, and support 17 of a second upper arm 12.

Arms 11 and 12 are connected by the same number of rods 13 secured with nuts, into which helical springs 14 or similar are inserted.

Rods 13 run inside guides 8, enabling assembly 9 to slide in relation to the guard in constrast with the force exerted by springs 14.

Securing parts 10 consist of a pair of rings 15 and 16 which are clamped around arm 11 and support 16 with a limited force, allowing the assembly to rotate.

A pair of idle rollers 18 is fitted at the bottom of the guard, and a connector 19 to allow connection to dust exhausting equipment is fitted at the top of it.

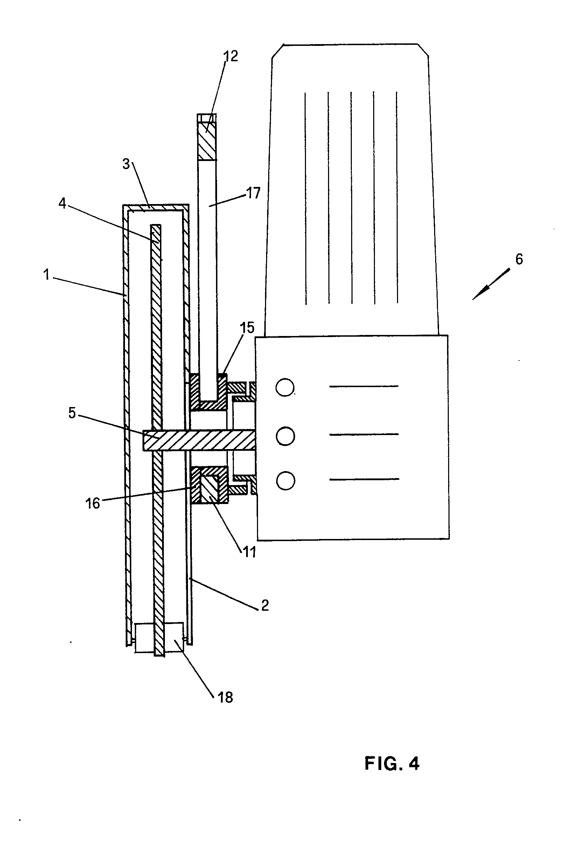

The guard is used as follows: the assembly is secured to the mill, fitted as in Figure 4; wall 1 is removed and the tool is fitted to shaft 5. The guard is then closed and the apparatus is ready for use.

Supppose, for example, that a wall needs to be cut. Normally the relative positions of the various parts are those shown in figures 1 and 4, with assembly 9 fully raised by springs 14 and the tool wholly inside the guard.

Rollers 18 are then rested on the wall to be cut, the motor is started and cutting is begun by pushing the tool downwards; the tool slides in relation to the guard together with assembly 9 until exiting from it. This situation is illustrated in Figure 2.

Cutting then proceeds, with rollers 10 enabling the assembly to slide easily along the wall.

During all these stages the tool remains wholly protected inside the guard, eliminating all operator risk.

When cutting is completed and the assembly is detached from the wall, springs 14 push the guard downwards so that it continues to surround the tool totally.

Mill 6 can rotate in relation to the guard inside ring 15, enabling the unit to be gripped in the most convenient way.

If required, springs or similar return equipment could be incorporated to return the unit to the starting position.

The size and the materials used can obviously be varied in accordance with the required use.

## Claims

1. Guard for rotary disc tools of the type comprising a casing which wholly surrounds the tool except for one side, characterised by the fact that it contains systems designed to enable the said tool to slide in relation to the said guard and exit at the said free side.

2. Guard for rotary disc tools comprising a protective casing which wholly surrounds the tool except for one free side, a support which slides in relation to the said guard and equipment designed to allow the tool to be fitted to the said support.

3. Guard in accordance with claim 2, characterised by the fact that it comprises flexible equipment to return the said support.

4. Guard in accordance with claim 2 or 3, characterised by the fact that two or more idle rollers are fitted at the said free side to allow the assembly to slide during the work.

5. Guard in accordance with claim 2, characterised by the fact that it includes a connector to allow connection to dust exhausting equipment.

6. Guard for rotary disc tools characterised by the fact that it includes:
- a casing which wholly surrounds the tool except for one free side
- a pair of guides integral with the said casing
- a framework fitted with equipment designed to allow the tool drive apparatus to be fitted; the said framework is designed to slide along the said guides, moving from a position in which the tool is wholly enclosed within the guard to a position in which the tool projects through the said free side.

7. Guard in accordance with claim 5, characterised by the fact that it includes flexible equipment designed to return the tool inside the guard.

FIG. 1

FIG. 2

FIG. 3

FIG. 4